# EUROPÄISCHE PATENTSCHRIFT

(11) **EP 2 158 802 B1**
(45) Veröffentlichungstag und Bekanntmachung des Hinweises auf die Patenterteilung: **08.08.2012**
(21) Anmeldenummer: 09009358.4
(22) Anmeldetag: 18.07.2009
(51) Int. Cl.: A01D 34/00

(54) **Roboterfahrzeug-Reinigungsvorrichtungs-System**
Robotic vehicle cleaning device system
Système de dispositif de nettoyage d'un véhicule robot

(30) Priorität: 01.09.2008 DE 102008045120
(43) Veröffentlichungstag der Anmeldung: 03.03.2010
(73) Patentinhaber: Thallner, Erich, 4782 St. Florian (AT)
(72) Erfinder: Thallner, Erich, 4782 St. Florian (AT)
(74) Vertreter: Schweiger, Johannes

(56) Entgegenhaltungen:
- WO-A2-2005/074362
- CH-A5- 675 218
- DE-A1- 10 152 726
- US-A- 4 180 964
- US-A- 5 959 423
- US-A1- 2005 212 478
- US-A1- 2007 209 681

## Beschreibung

Die Erfindung betrifft ein System, umfassend mindestens ein autonom arbeitendes Roboterfahrzeug sowie eine Reinigungsvorrichtung für das Roboterfahrzeug.

Bekannt sind Rasenmäherroboter, die eine Rasenfläche autonom bearbeiten, d.h. ohne dass sie dabei von Menschenhand geführt werden müssten.

Sehr einfach aufgebaute autonome Rasenmäherfahrzeuge orientieren sich anhand eines unter oder auf dem Rasen liegenden elektrischen Leiters. Nachteilig bei derartigen Rasenmäherrobotern ist der hohe Installationsaufwand, der zunächst ein Verlegen der elektrischen Leitung beinhaltet.

Ferner sind autonom arbeitende Rasenmäherroboterfahrzeuge bekannt, die sich auf dem Arbeitsbereich anhand einer Satellitennavigation, insbesondere einer GPS-Navigation, orientieren. Weiterhin ist es bekannt, die Position eines Roboterfahrzeugs unter Einsatz von den Arbeitsbereich begrenzenden Landmarken zu detektieren, die Positionssignale aussenden, welche von einer entsprechenden, mobilen Empfangseinheit des Roboterfahrzeugs erfasst werden. Die Positionserkennung erfolgt dabei beispielsweise über ein Triangulationsverfahren.

Nachteilig bei bekannten Rasenmäherroboterfahrzeugen ist allgemein die mit der Zeit zunehmende Verschmutzung des Mähwerks, die im Extremfall sogar zu einem Ausfall des, insbesondere über Akkumulatoren mit elektrischer Energie versorgten, Rasenmäherroboterfahrzeugs führen kann. Um dies zu vermeiden, muss das Rasenmäherroboterfahrzeug nach gewissen Zeitintervallen gereinigt werden. Dies wiederum mindert die Komfortabilität erheblich, die heute von Anbietern für Rasenmäherroboterfahrzeuge als Haupt-Verkaufsargument in den Vordergrund gestellt wird.

In der WO 2005/074362 A2, die als nächstliegender Stand der Technik betrachtet wird, ist ein System offenbart, umfassend ein autonom arbeitendes Antriebsmittel zum Bedenken und Antreiben sowie Arbeitsmittel zum Bearbeiten eines Arbeitsbereichs aufweisendes, Roboterfahrzeug, da es als Rasenmäher ausgebildet ist, sowie eine von dem Roboterfahrzeug aufsuchbare, stationäre Ladestation. Weitere Roboterfahrzeuge und/oder Reinigungsvorrichtungen sind in der US 5 959 423 A, der DE 101 52 726 A1, der US 4 180 964 A, der CH 675 218 A5, der US 2007/209681 A1 und der US 2005/212478 A1 offenbart.

Der Erfindung liegt daher die Aufgabe zugrunde, ein besonders komfortabel einsetzbares System, umfassend ein autonom arbeitendes Roboterfahrzeug, vorzuschlagen, bei dem manuelle Eingriffe auf ein Minimum reduziert sind.

Diese Aufgabe wird mit einem System mit den Merkmalen des Anspruchs 1 gelöst. Vorteilhafte Weiterbildungen der Erfindung sind in den Unteransprüchen angegebenen.

Der Erfindung liegt der Gedanke zugrunde, dem einen Arbeitsbereich mit Hilfe von Arbeitsmitteln autonom bearbeitenden Roboterfahrzeug eine stationäre Reinigungsvorrichtung zuzuordnen, die von dem Roboterfahrzeug automatisch und/oder nach entsprechender Befehlsvorgabe aufgesucht wird. Dabei ist die Reinigungsvorrichtung bevorzugt derart ausgebildet, dass sie das Roboterfahrzeug, vorzugsweise zumindest die Arbeitsmittel des Roboterfahrzeugs, noch bevorzugter den die Arbeitsmittel umgebenden Raum, insbesondere Unterboden, unter Einsatz von Fluid, insbesondere Wasser und/oder Luft, vorzugsweise Druckluft, reinigt. Die Reinigungsvorrichtung dient vorzugsweise zum Reinigen von durch die Arbeitsmittel (13) verursachten Verschmutzungen. Im Hinblick auf die konkrete Ausbildung der Reinigungsvorrichtung gibt es eine Vielzahl von Möglichkeiten. So kann diese beispielsweise eine rotierende oder alternativ statisch angeordnete Wasser- und/oder Luftdüse (Reinigungsmittel) enthalten, mit Hilfe derer das Roboterfahrzeug, insbesondere mit unter hohem Druck stehendem Wasser und/oder unter hohem Druck stehender Luft, zu Reinigungszwecken beaufschlagt wird. Zusätzlich oder alternativ kann mindestens eine, vorzugsweise rotierende, Bürste (Reinigungsmittel) zur mechanischen Reinigung vorgesehen werden. Im Hinblick auf die Ausbildung des Roboterfahrzeugs gibt es ebenfalls eine Vielzahl von Möglichkeiten. So ist es beispielsweise denkbar, dass das Roboterfahrzeug sich auf dem Arbeitsbereich anhand eines den Arbeitsbereich begrenzenden Drahtes und/oder anhand eines unter dem Arbeitsbereich positionierten, insbesondere vergrabenen, stromdurchflossenen Leiters orientiert. Alternativ ist es denkbar, dass das Roboterfahrzeug und/oder eine stationäre Basisstation die Positionskoordinaten des Roboterfahrzeugs auf dem Arbeitsbereich ständig überwacht, wobei zur Positionserkennung intern im Roboterfahrzeug angeordnete Sensoren und/oder extern, vorzugsweise stationär, angeordnete Sensoren, wie beispielsweise eine Kamera etc., vorgesehen sein können. Ganz besonders bevorzugt ist es, wenn die Positionserkennung auf der Basis einer Satellitennavigation erfolgt, die vorzugsweise von lokalen Sensoren unterstützt wird. Im Hinblick auf das "Wie" des Abfahrens des Arbeitsbereichs gibt es ebenfalls unterschiedliche Möglichkeiten. In einer einfachsten, weniger bevorzugten Variante bearbeitet das Roboterfahrzeug den Arbeitsbereich nach einer Zufallsnavigation. Bevorzugt ist es jedoch, wenn das Roboterfahrzeug den Arbeitsbereich gemäß einer, vorzugsweise vorgebbaren, Abfahrstrategie, beispielsweise in mäanderförmigen Bahnen etc., bearbeitet, wodurch zum einen Energie eingespart werden kann, Mehrfachüberfahrungen, zumindest weitgehend, vermieden werden und darüber hinaus im Falle der Ausbildung des Roboterfahrzeugs als Rasenmäherfahrzeug ein ästhetisch ansprechendes Schnittbild erhalten wird.

In Weiterbildung der Erfindung ist mit Vorteil vorgesehen, dass das Roboterfahrzeug die Reinigungsvorrichtung in regelmäßigen Intervallen anfährt, beispielsweise nach jedem Bearbeitungsvorgang. Bevorzugt sind die Intervalle programmierbar. Zusätzlich oder alternativ kann das Roboterfahrzeug bzw. können entsprechende Steuermittel des Roboterfahrzeugs derart ausgebildet sein, dass das Roboterfahrzeug die Reinigungsvorrichtung zu bestimmten Zeitpunkten, beispielsweise zu bestimmten Uhrzeiten, anfährt und/oder in Abhängigkeit des Verschmutzungsgrades, welcher bevorzugt über geeignete Sensormittel, beispielsweise eine Digitalkamera, erfasst und bewertet wird.

Besonders bevorzugt ist es, wenn Mittel zum automatischen Starten des Reinigungsvorgangs vorgesehen sind, sodass der Reinigungsvorgang nicht von einer Person manuell gestartet werden muss. Die Mittel zum automatischen Starten des Reinigungsvorgangs starten den Reinigungsvorgang bevorzugt unter der Bedingung dass sich das Roboterfahrzeug auf/in der Reinigungsvorrichtung befindet. Hierzu können die Mittel zum automatischen Starten des Reinigungsvorgangs mindestens einen Sensor, beispielsweise eine Lichtschranke und/oder einen Drucksensor und/oder einen Bewegungssensor etc., umfassen, der erkennt, ob sich das Roboterfahrzeug an einer geeigneten Position zum Starten des Reinigungsvorgangs befindet. Wird eine derartige Position erkannt, lösen geeignete, vorzugsweise stationäre, Steuermittel den Reinigungsvorgang, insbesondere durch eine Wasserpumpe etc., aus. Statt einer Wasserpumpe kann auch einfach ein unter Druck stehender Wasseranschluss durch ein automatisches Ventil aktiviert werden.

Zusätzlich oder alternativ ist es möglich, dass das Roboterfahrzeug selbst vorgibt, wann ein Reinigungsvorgang zu starten ist. Hierzu umfassen die Mittel zum automatischen Starten des Reinigungsvorgangs bevorzugt interne am Roboterfahrzeug angeordnete oder extern von dem Roboterfahrzeug vorgesehene Positionserkennungsmittel, die erkennen, wenn sich das Roboterfahrzeug in/an/auf der Reinigungsvorrichtung befindet, woraufhin ein Startbefehl zum Starten des Reinigungsvorgangs ergeht, der beispielsweise von dem Roboterfahrzeug über Funk, etc. an eine, insbesondere stationäre, Steuereinrichtung der Reinigungsvorrichtung übermittelt wird.

Besonders bevorzugt ist eine Ausführungsform, bei der die Reinigungsvorrichtung eine, vorzugsweise in den Boden eingebrachte, Vertiefung umfasst, in der zumindest teilweise die Reinigungsmittel, insbesondere mindestens eine statische oder dynamische Wasserspritzdüse oder eine dynamische oder statische Wasserspritzdüsenanordnung vorgesehen sind, die insbesondere für eine Unterbodenreinigung des Roboterfahrzeugs, vorzugsweise der Arbeitsmittel, Sorge tragen. Zusätzlich oder alternativ können als Reinigungsmittel Düsen zur Reinigung des Roboterfahrzeugs von oben und/oder von der Seite vorgesehen werden. Der Vorteil der Unterbodenreinigung besteht darin, dass die Reinigung auf die durch die Arbeitsmittel verschmutzten Bauteile des Roboterfahrzeugs konzentriert wird. Es wird dadurch mit geringstem Materialeinsatz (Fluid) eine maximale Reinigungswirkung erzielt.

Bevorzugt umfasst die Reinigungsvorrichtung weiterhin mindestens ein, vorzugsweise von der Vertiefung gebildetes, Behältnis zum Sammeln von verschmutztem Wasser, welches beispielsweise ausschließlich aufgrund eines entsprechenden Gefälles über eine Abflussleitung abfließen kann oder von einer Pumpe entsorgt wird. Eine besonders aufwändig gestaltete Reinigungsvorrichtung kann auch Aufbereitungsmittel zum Aufbereiten des verschmutzen Wassers und zur entsprechenden Wiederverwendung dieses aufbereiteten Wassers haben.

Eine besonders gute Reinigungswirkung kann erzielt werden, wenn die Reinigungsvorrichtung Mittel zum Zudosieren von Reinigungsmitteln und/oder sonstigen Chemikalien aufweist.

Besonders bevorzugt ist es, wenn die Reinigungsvorichtung, beispielsweise durch Zugabe einen entsprechenden Zusatz zum Reinigungswasser, derart ausgebildet sind, dass mit diesen eine Funktionsschicht auf das Roboterfahrzeug auftragbar ist, beispielsweise eine Schicht (Schutzschicht), die eine einfachere Reinigung ermöglicht, insbesondere dadurch, dass es Schmutzpartikeln erschwert wird, an dem Roboterfahrzeug bzw. der Schutzschicht anzuhaften. Zusätzlich oder alternativ kann die Funktionsschicht als Rasenpflegeschicht ausgebildet sein, also beispielsweise Düngstoffe und/oder Unkrautvernichtungsmittel etc. umfassen, die beim Mähvorgang am Gras abgestreift werden.

In Weiterbildung der Erfindung ist mit Vorteil vorgesehen, dass die Reinigungsvorrichtung Energieversorgungsmittel, vorzugsweise einen elektrischen Anschluss, zum Versorgen der Akkumulatoren des Roboterfahrzeugs mit elektrischer Energie umfasst, wobei es ganz besonders bevorzugt ist, wenn das Roboterfahrzeug automatisch an die Energieversorgungsmittel andocken kann. Dabei ist es möglich, dass sogar die Zeit, in der das Roboterfahrzeug in der Reinigungsvorrichtung gereinigt wird, zur Energieversorgung genutzt wird.

Für den Fall des Vorsehens von Energieversorgungsmitteln ist die Reinigungsvorrichtung ganz besonders dazu geeignet, als Basisstation für das Roboterfahrzeug zu dienen, in der das Roboterfahrzeug stationiert ist, wenn es nicht in Betrieb ist.

In Weiterbildung der Erfindung ist mit Vorteil vorgesehen, dass das Roboterfahrzeug als Rasenmäherfahrzeug ausgebildet ist, wobei die Arbeitsmittel in diesem Fall ein Mähwerk umfassen, mit dem der Arbeitsbereich, vorzugsweise eine Rasenfläche, bevorzugt mit einer geeigneten Mähstrategie, bearbeitet, d.h. geschnitten, werden kann.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
Fig. 1 eine schematische Darstellung eines Arbeitsbereichs mit darauf angeordnetem Roboterfahrzeug sowie darauf befindlicher Reinigungsvorrichtung, wobei sich das Roboterfahrzeug anhand eines unter dem Arbeitsbereich positionierten, stromführenden Drahtes orientierend ausgebildet ist,
Fig. 2 eine alternative Ausführungsform eines Systems, umfassend ein Roboterfahrzeug und eine Reinigungsvorrichtung, wobei sich das Roboterfahrzeug auf den Arbeitsbereich anhand von Satellitennavigation und/oder Digitalkameradaten orientierend ausgebildet ist, und
Fig. 3 eine mögliche Ausführungsform einer Reinigungsvorrichtung in einer geschnittenen Ansicht.

In den Figuren sind gleiche Elemente und Elemente mit der gleichen Funktion mit den gleichen Bezugszeichen gekennzeichnet.

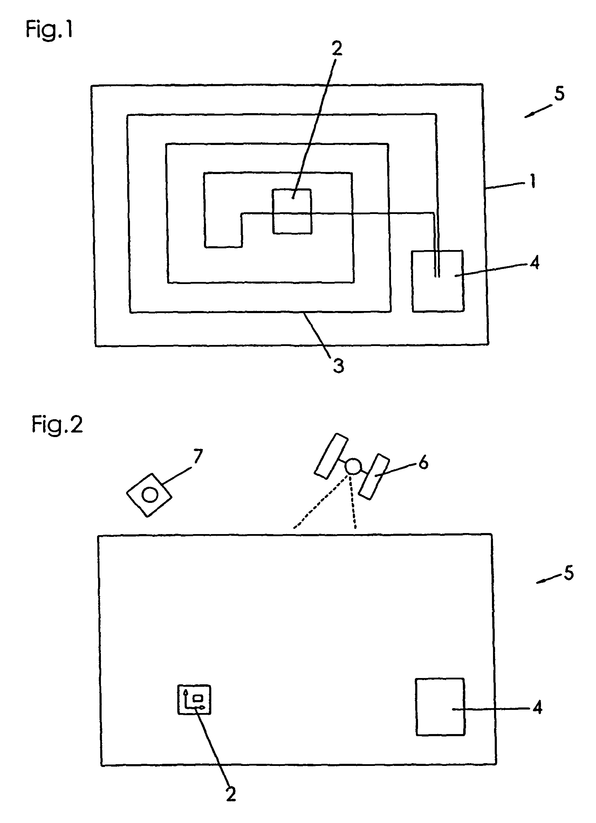

In Fig. 1 ist ein schematisch als Rechteckfläche konturierter Arbeitsbereich 1, hier eine Rasenfläche, gezeigt, die mit Hilfe eines als Rasenmäherfahrzeug ausgebildeten autonomen Roboterfahrzeugs 2 in definierten oder autonomen zufälligen, hier spiralförmigen, Bahnen bearbeitbar, d.h. schneidbar, ist. Das Roboterfahrzeug 2 umfasst geeignete, nicht gezeigte Sensor- und Steuermittel, um autonom einem unterhalb des Arbeitsbereichs 1 positionierten, stromdurchflossenen Leiter 3 folgen zu können. Der stromdurchflossene Leiter 3 führt zu einer lediglich schematisch angedeuteten Reinigungsvorrichtung 4, mit der das Roboterfahrzeug 2, genauer ein auf der Unterseite angeordnetes, nicht gezeigtes Mähwerk, reinigbar ist. Bei einer entsprechenden Ausgestaltung der Reinigungsvorrichtung 4 kann das Roboterfahrzeug 2, insbesondere durch geeignet angebrachte Sprühdüsen, auch von oben und/oder von der Seite gereinigt werden.

Zusammenfassend zeigt Fig. 1 also ein System 5, umfassend ein autonom arbeitendes Roboterfahrzeug 2, das mit nicht gezeigten, von ebenfalls nicht gezeigten Steuermitteln angesteuerten, Antriebsmitteln den Arbeitsbereich 1 befährt, auf dem eine Reinigungsvorrichtung 4 angeordnet ist. Es ist alternativ zu der dargestellten Ausführungsvariante auch möglich, die Reinigungsvorrichtung 4 außerhalb des Arbeitsbereichs 1, vorzugsweise unmittelbar benachbart zum Arbeitsbereich 1, anzuordnen.

Fig. 2 zeigt ebenfalls ein System, umfassend ein autonom arbeitendes Roboterfahrzeug 2 sowie eine lediglich schematisch dargestellte Reinigungsvorrichtung 4. Im Gegensatz zu dem Ausführungsbeispiel gemäß Fig. 1 orientiert sich das Roboterfahrzeug auf dem Arbeitsbereich 1 nicht anhand eines stromdurchflossenen Leiters, sondern mit Hilfe einer an sich bekannten GPS-Navigation, die auf Satellitensignale mehrerer Satelliten 6 (nur ein Satellit dargestellt) zurückgreift. Zusätzlich oder alternativ kann mindestens eine, insbesondere als Digitalkamera ausgebildete, Kamera 7 zur Positionserkennung eingesetzt werden, die bevorzugt mit einer geeigneten, ebenfalls nicht gezeigten Bildverarbeitungssoftware zusammenwirkt, die in einer von dem Roboterfahrzeug 2 externen, stationären Station oder auf dem Roboterfahrzeug 2 lokalisiert sein kann. Zusätzlich oder alternativ zu den gezeigten Positionserkennungsmöglichkeiten gibt es eine Vielzahl weiterer, nicht dargestellter, an sich aus dem Stand der Technik bekannter Orientierungsmöglichkeiten. So ist beispielsweise der Einsatz von Landmarken und/oder dem Roboterfahrzeug 2 integrale Sensoren wie IR-Sensoren etc. zur Orientierungszwecken möglich.

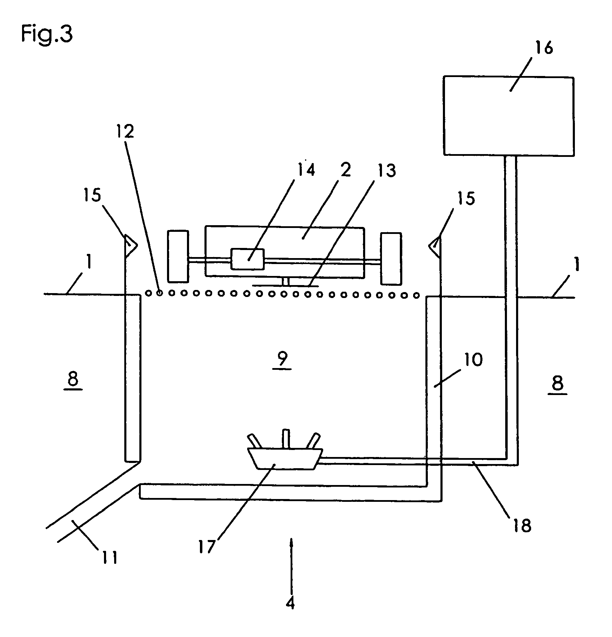

Fig. 3 zeigt eine mögliche Ausführungsform der in den Fig. 1 und 2 lediglich schematisch angedeuteten Reinigungsvorrichtung 4. Diese umfasst eine in den Boden 8 eingebrachte Vertiefung 9, die mit einer seitlichen sowie einer bodenseitigen Verkleidung 10 ausgestattet ist. Die Vertiefung 9 dient als Wanne zum Sammeln von Schmutzwasser, welches über einen Abflusskanal 11 abführbar ist. Oberhalb der Vertiefung 9 befindet sich ein Metallrost 12, auf dem sich ein als Rasenmäherfahrzeug ausgebildetes Roboterfahrzeug 2 mit als Mähwerk ausgebildeten, unterseitigen Arbeitsmitteln 13 befindet. Lediglich schematisch sind, vorzugsweise einen Elektromotor umfassende sowie bevorzugt lenkbare Räder und/oder einen Differentialantrieb umfassende Antriebsmittel 14 gezeigt. Ferner ist ein als Lichtschranke ausgebildeter Sensor 15 gezeigt, der erkennt, ob sich ein Roboterfahrzeug 2 auf dem Metallrost 12 befindet oder nicht. Im Falle der Detektion des Roboterfahrzeugs 2 wird die Reinigungsvorrichtung automatisch von einer Steuereinrichtung 16 gestartet, die dafür sorgt, dass eine Spritzdüsenanordnung 17, die sich innerhalb der Vertiefung 9 befindet, mit Wasserdruck durch eine Wasserleitung 18 beaufschlagt wird. Hierzu wird eine nicht gezeigte Wasserpumpe in Lauf gesetzt.

Die Reinigungsvorrichtung 4 umfasst bevorzugt weiterhin nicht gezeigte Dosiermittel zum Zudosieren von mindestens einem chemischen Mittel zum Waschwasser, wobei das mindestens eine chemische Mittel aus mindestens einem separaten Tank (ebenfalls nicht gezeigt) bezogen werden kann. Bei dem chemischen Mittel kann es sich um ein Reinigungsmittel oder um ein eine Funktionsschicht ausbildendes Mittel, beispielsweise zur Reduzierung der Verschmutzung und/oder zum Düngen des Rasens handeln.

Die Reinigungsvorrichtung 4 kann zusätzlich mit nicht gezeigten Energieversorgungsmitteln, die vorzugsweise eine elektrische, vorzugsweise automatisch andockbare, Steckdose umfassen, ausgestattet werden. Auch ist es möglich, die Reinigungsvorrichtung 4 mit einem Dach zu versehen und/oder oben und/oder seitlich angeordneten Reinigungsdüsen. Gegebenenfalls kann auch eine Bürstenanlage zum mechanischen Reinigen des Roboterfahrzeugs vorgesehen werden.

Die für einen einwandfreien Betrieb notwendigen Ventile sowie die einzelnen Steuerelemente und ggf. vorgesehene Mischer zum Zudosieren mindestens einer chemischen Substanz sind aus Übersichtlichkeitsgründen nicht gezeigt.

### Bezugszeichenliste

- 1: Arbeitsbereich
- 2: Roboterfahrzeug
- 3: elektrischer Leiter
- 4: Reinigungsvorrichtung
- 5: System
- 6: Satellit
- 7: Kamera
- 8: Boden
- 9: Vertiefung
- 10: Verkleidung
- 11: Abflussleitung
- 12: Metallrost
- 13: Arbeitsmittel
- 14: Antriebsmittel
- 15: Sensor
- 16: Steuereinrichtung
- 17: Wasserspritzdüsenanordnung
- 18: Wasserleitung

## Patentansprüche

1. System, umfassend ein autonom arbeitendes, Antriebsmittel (14) zum Lenken und Antreiben sowie Arbeitsmittel (13) zum Bearbeiten eines Arbeitsbereichs (1) aufweisendes, Roboterfahrzeug (2), sowie eine von dem Roboterfahrzeug (2) aufsuchbare, stationäre Reinigungsvorrichtung (4) mit zum Beaufschlagen des Roboterfahrzeugs (2) mit Fluid ausgebildeten Reinigungsmitteln zum Reinigen des Roboterfahrzeugs (2), vorzugsweise zum Reinigen von durch die Arbeitsmittel (13) verursachten Verschmutzungen, wobei das Roboterfahrzeug (2) ein Rasenmäherfahrzeug ist und die Arbeitsmittel (13) als Mähwerk ausgebildet sind.

2. System nach Anspruch 1,
**dadurch gekennzeichnet,**
**dass** das Roboterfahrzeug (2) die Reinigungsvorrichtung (4) in regelmäßigen, vorzugsweise vorgebbaren, Intervallen und/oder zu bestimmten Zeitpunkten und/oder in Abhängigkeit des Verschmutzungsgrades anfahrend ausgebildet ist.

3. System nach einem der Ansprüche 1 oder 2,
**dadurch gekennzeichnet,**
**dass**, insbesondere zeitgesteuerte, Mittel zum automatischen Starten des Reinigungsvorgangs vorgesehen sind.

4. System nach Anspruch 3,
**dadurch gekennzeichnet,**
**dass** die Mittel zum automatischen Starten des Reinigungsvorgangs mindestens einen Sensor (15) umfassen, der erkennt, ob der Rasenmäher sich an der Reinigungsvorrichtung (4) befindet oder nicht.

5. System nach einem der Ansprüche 3 oder 4,
**dadurch gekennzeichnet,**
**dass** Bestandteil der Mittel zum automatischen Starten des Reinigungsvorgangs interne und/oder externe Positionserkennungsmittel (3, 6, 7) zum Erkennen der Position des Roboterfahrzeugs (2) auf dem Arbeitsbereich (1) sind.

6. System nach einem der vorhergehenden Ansprüche,
**dadurch gekennzeichnet,**
**dass** die Reinigungsvorrichtung (4) eine Vertiefung (9) umfasst, in der mindestens eine statische oder dynamische Wasserspritzdüse oder -düsenanordnung (17) angeordnet ist.

7. System nach einem der vorhergehenden Ansprüchen,
**dadurch gekennzeichnet,**
**dass** die Reinigungsvorrichtung (4) ein Behältnis zum Sammeln von verschmutztem Wasser umfasst, welches, vorzugsweise mittels einer Pumpe und/oder einer Abflussleitung (11) entsorgbar ist.

8. System nach einem der vorhergehenden Ansprüchen,
**dadurch gekennzeichnet,**
**dass** die Reinigungsvorrichtung (4) Mittel zum Zudosieren von chemischen Substanzen umfasst.

9. System nach einem der vorhergehenden Ansprüche,
**dadurch gekennzeichnet,**
**dass** die Reinigungsmittel zum Aufbringen einer Funktionsschicht auf das Roboterfahrzeug (2), insbesondere einer Schutzschicht gegen Verschmutzung und/oder eine Rasenpflegeschicht ausgebildet ist.

10. System nach einem der vorhergehenden Ansprüche,
**dadurch gekennzeichnet,**
**dass** die Reinigungsvorrichtung (4) Energieversorgungsmittel für das Roboterfahrzeug (2) umfasst.

11. System nach einem der vorhergehenden Ansprüche,
**dadurch gekennzeichnet,**
**dass** die Reinigungsvorrichtung (4) überdacht ist.

## Claims

1. A system, comprising a robot vehicle (2) which operates autonomously and which has drive means (14) for steering and driving as well as working apparatus (13) for working a working region (1), as well as a stationary cleaning device (4) which can be sought by the robot vehicle (2) with cleaning apparatus which are made for supplying fluid to the robot vehicle (2) for cleaning of the robot vehicle (2), preferably for cleaning away dirt caused by the working apparatus (13), the robot vehicle (2) being a grass mowing vehicle and the working apparatus (13) being made as cutter bar.

2. The system as claimed in Claim 1, wherein the robot vehicle (2) is made to drive up to the cleaning device (4) at regular, preferably defmable intervals and/or at certain times and/or depending on the degree of dirtiness.

3. The system as claimed in one of Claims 1 or 2, wherein there are especially time-controlled means for starting of the cleaning process.

4. The system as claimed in Claim 3, wherein the means for automatic starting of the cleaning process comprise at least one sensor (15) which recognizes whether the grass mower is at the cleaning device (4) or not.

5. The system as claimed in one of Claims 3 or 4, wherein internal and/or external position detection means (3, 6, 7) for detecting the position of the robot vehicle (2) on the working region (1) are a component of the means for automatic starting of the cleaning process.

6. The system as claimed in one of the preceding claims, wherein the cleaning device (4) comprises a depression (9) in which there is at least one static or dynamic water spray nozzle or nozzle arrangement (17).

7. The system as claimed in one of the preceding claims, wherein the cleaning device (4) comprises a tank for collecting dirty water which can be disposed of preferably by means of a pump and/or a drain line (11).

8. The system as claimed in one of the preceding claims, wherein the cleaning device (4) comprises means for metering of chemical substances.

9. The system as claimed in one of the preceding claims, wherein the cleaning apparatus is made for applying a function layer to the robot vehicle (2), especially a protective layer against dirt and/or a grass care layer.

10. The system as claimed in one of the preceding claims, wherein the cleaning device (4) comprises energy supply means for the robot vehicle (2).

11. The system as claimed in one of the preceding claims, wherein the cleaning device (4) is spanned by a roof.

## Revendications

1. Système, comprenant un véhicule robot (2) présentant un moyen d'entraînement (14), travaillant de façon autonome pour le guidage et l'entraînement et des moyens de travail (13) pour le traitement d'une zone de travail (1), ainsi qu'un dispositif de nettoyage (4) fixe, pouvant être inspecté par le véhicule robot (2), doté de moyens de nettoyage conçus pour alimenter le véhicule robot (2) avec du fluide pour le nettoyage du véhicule robot (2), de préférence pour nettoyer les salissures provoquées par les moyens de travail (13), le véhicule robot (2) étant un véhicule tondeur de gazon et les moyens de travail (13) étant conçus sous forme de faucheuse.

2. Système selon la revendication 1,
**caractérisé**
**en ce que** le véhicule robot (2) est conçu de façon à démarrer le dispositif de nettoyage (4) à des intervalles réguliers, de préférence pouvant être prédéfinis et/ou à des moments définis et/ou en fonction du degré de salissure.

3. Système selon l'une des revendications 1 ou 2,
**caractérisé en ce qu'**il est prévu des moyens, en particulier commandés dans le temps, pour le démarrage automatique de l'opération de nettoyage.

4. Système selon la revendication 3,
**caractérisé**
**en ce que** les moyens pour le démarrage automatique de l'opération de nettoyage comprennent au moins un capteur (15), qui détecte si la tondeuse à gazon se trouve ou non sur le dispositif de nettoyage.

5. Système selon l'une des revendications 3 ou 4,
**caractérisé**
**en ce que** des moyens de reconnaissance de position (3, 6, 7), internes et/ou externes, destinés à la détection de la position du véhicule robot (2) sur la zone de travail (1) sont un composant des moyens pour le démarrage automatique de l'opération de nettoyage.

6. Système selon l'une des revendications précédentes,
**caractérisé**
**en ce que** le dispositif de nettoyage (4) comprend une cavité (9), dans laquelle est disposée au moins une buse de pulvérisation d'eau ou un agencement de buse de pulvérisation d'eau (17) statique ou dynamique.

7. Système selon l'une des revendications précédentes,
**caractérisé**
**en ce que** le dispositif de nettoyage (4) comprend un récipient pour la collecte d'eau salie, qui peut être évacuée, de préférence au moyen d'une pompe et/ou d'une conduite d'écoulement (11).

8. Système selon l'une des revendications précédentes,
**caractérisé**
**en ce que** le dispositif de nettoyage (4) comprend des moyens pour l'ajout dosé de substances chimiques.

9. Système selon l'une des revendications précédentes,
**caractérisé**
**en ce que** les moyens de nettoyage sont conçus pour l'application d'une couche fonctionnelle sur le véhicule robot (2), en particulier d'une couche de protection contre l'encrassement et/ou d'une couche d'entretien de gazon.

10. Système selon l'une des revendications précédentes,
**caractérisé**
**en ce que** le dispositif de nettoyage (4) comprend des moyens d'alimentation en énergie pour le véhicule robot (2).

11. Système selon l'une des revendications précédentes,
**caractérisé**
**en ce que** le dispositif de nettoyage (4) est couvert.
